# EUROPÄISCHE PATENTSCHRIFT

(11) **EP 1 852 313 B1**
(45) Veröffentlichungstag und Bekanntmachung des Hinweises auf die Patenterteilung: **13.01.2010**
(21) Anmeldenummer: 07008948.7
(22) Anmeldetag: 03.05.2007
(51) Int. Cl.: B60R 7/04, B60N 3/10

(54) **Adapter zum Befestigen eines tragbaren Kühlbehälters an einer Verankerungsvorrichtung an einem Sitz in einem Kraftfahrzeug sowie Kühlbehälter**
Adapter for attaching a portable coolbox to an anchoring device on a seat of a motor vehicle and coolbox
Adaptateur destiné à la fixation d'un récipient frigorifique portatif sur un dispositif d'ancrage d'un siège de véhicule automobile tout comme récipient frigorifique

(30) Priorität: 03.05.2006 DE 202006007172 U
(43) Veröffentlichungstag der Anmeldung: 07.11.2007
(73) Patentinhaber: Waeco International GmbH, 48282 Emsdetten (DE)
(72) Erfinder: Wähning, Peter Maria, 48282 Emsdetten (DE)
(74) Vertreter: Grosse - Schumacher - Knauer - von Hirschhausen

(56) Entgegenhaltungen:
- EP-A- 1 099 602
- DE-A1- 10 357 356
- US-A1- 2002 011 505
- US-A1- 2006 076 379

## Beschreibung

### Gebiet der Erfindung

Die Erfindung betrifft einen Adapter zum Befestigen eines tragbaren Kühlbehälters an einer Verankerungsvorrichtung an einem Sitz in einem Kraftfahrzeug sowie einen Kühlbehälter nach dem Oberbegriff des Anspruchs 1 bzw. 13.

### Hintergrund der Erfindung

Das Mitführen von Gegenständen wie etwa einem Kühlbehälter im Fahrgastraum eines Kraftfahrzeugs ist problematisch. Wird der Kühlbehälter auf den Fußboden gestellt, nimmt er Platz im Fußbereich weg und verhindert so ein komfortables Sitzen. Zudem erschwert die Anordnung im Fußbereich die Zugänglichkeit zum Inneren des Kühlbehälters. Außerdem läßt der Abstand nach vorne nur kleine Abmessungen des Kühlbehälters zu. Daher wird der Kühlbehälter bevorzugt auf einem Sitz, insbesondere dem mittleren Sitz einer hinteren dreisitzigen Sitzbank eines Kraftfahrzeugs, abgestellt, so dass weder der Sitzkomfort noch die Zugänglichkeit behindert werden. Allerdings muß er in diesem Fall ausreichend stark am Sitz befestigt werden. Andernfalls könnte er bei starkem Abbremsen oder einem Unfall durch den Fahrgastraum geschleudert werden und die Insassen verletzen.

Eine geeignete Vorrichtung zum Befestigen eines Gegenstandes an einem Sitz eines Kraftfahrzeugs ist aus der DE 103 57 356 A1 bekannt. Die Vorrichtung besteht aus einem Trägerelement, das zum Verbleib am Sitz vorgesehen ist und Bügel aufweist, die mit entsprechenden Rastvorrichtungen am Boden des Gegenstandes in Eingriff bringbar sind. Nachteilig bei dieser Lösung ist, dass der Gegenstand am Boden Rastvorrichtungen aufweisen muss. Diese können bei Gebrauch außerhalb des Fahrzeugs verschmutzen und beschädigt werden. Zudem ist das Trägerelement fest in das Auto eingebaut und verbleibt darin auch bei Nichtnutzung. Um keinen Sitzplatz dauerhaft zu opfern, ist das Trägerelement daher aus der Rückenlehne heraus- und bei Nichtgebrauch in diese hineinverschwenkbar. Damit ist aber der Platz für den Gegenstand fest vorgegeben und nicht mehr frei wählbar; zudem kann nur ein Gegenstand pro Kraftfahrzeug mitgeführt werden. Schließlich sind Trägerelement und Gegenstand eindeutig aufeinander abgestimmt, so daß Gegenstände von Drittanbietern nicht verwendet werden können. Der bekannten Vorrichtung mangelt es somit an Flexibilität hinsichtlich der verwendbaren Gegenstände und der Anordnung im Fahrgastraum.

### Zusammenfassung der Erfindung

Der Erfindung liegt daher die Aufgabe zugrunde, einen Adapter zum Befestigen eines tragbaren Kühlbehälters an einer Verankerungsvorrichtung an einem Sitz in einem Kraftfahrzeug sowie einen Kühlbehälter nach dem Oberbegriff des Anspruchs 1 bzw. 13 zu schaffen, mit denen sich eine verbesserte Flexibilität hinsichtlich des zu befestigenden Kühlbehälters und dessen Anordnung im Fahrgastraum ergibt und bei denen der Adapter bei Bedarf einfach am Kühlbehälter montierbar und bei Nichtbenutzung vollständig entfernbar ist und der Kühlbehälter mit Adapter einfach am Sitz des Kraftfahrzeugs verankerbar und zusammen mit dem Adapter schnell und einfach lösbar ist.

Diese Aufgabe wird entsprechend den Merkmalen des Anspruchs 1 bzw. 13 gelöst.

Demnach wird ein Adapter zum Befestigen eines tragbaren Kühlbehälters an einer insbesondere nach dem Isofix-Standard (ISO 13216-1) ausgebildeten Kindersitz-Verankerungsvorrichtung geschaffen, mit dem beliebige, also auch nicht unmittelbar für eine Verankerung ausgestaltete, Kühlbehälter auf einem beliebigen Sitz im Fahrgastraum sicher verankert werden können. Der Adapter wird bodenseitig mit dem Kühlbehälter verbunden, der danach einfach in eine Verankerungsvorrichtung, die zwei quer zur Fahrtrichtung beabstandete kraftfahrzeugfeste Verankerungspunkte, etwa Bügel oder dergleichen, aufweist, eines beliebigen Sitzes lösbar eingesetzt werden kann. Es ergibt sich eine verbesserte Flexibilität hinsichtlich des zu befestigenden Kühlbehälters und dessen Anordnung im Fahrgastraum sowie hinsichtlich der einfachen Montage und vollständigen Demontage bei Nichtbenutzung.

Das Grundelement verfügt dabei über zwei quer zur Fahrtrichtung voneinander beabstandete Rastarme, die an ihren freien Enden jeweils ein Rastelement aufweisen, das an den Verankerungspunkten (z.B. Bügeln) der Kindersitz-Verankerungsvorrichtung verankerbar ist, wobei die Verankerung durch werkzeugloses Betätigen einer Entriegelungsvorrichtung des Adapters lösbar ist. Hierdurch ist der Kühlbehälter mit montiertem Adapter einfach und sicher an einer standardisierten Kindersitz-Verankerungsvorrichtung, die in vielen Kraftfahrzeugen vorhanden ist, verankerbar.

Ein plattenförmiges Grundelement und zwei quer zur Fahrtrichtung voneinander beabstandete Rastarme des Adapters sind dabei in einer gemeinsamen Ebene angeordnet. Hierdurch bildet das Grundelement einen verlängerten Boden des Kühlbehälters, der bei einfachster Herstellbarkeit eine große Aufstellfläche bietet und ausreichende Stabilität selbst bei hoher Belastung sicherstellt. Im einfachsten Fall reicht ein einziges Befestigungselement zur bodenseitigen Verbindung zwischen dem plattenförmigen Grundelement und dem Kühlbehälter aus, da die Hauptlast beim Fahrbetrieb in der Ebene des Grundelements und damit quer zum Befestigungselement angreift. Es findet somit keine Zugbelastung des Befestigungselements in seiner Verbindungsrichtung statt.

Zweckmäßigerweise sind jedoch wenigstens zwei Befestigungselemente vorgesehen, von denen wenigstens eines randnah am plattenförmigen Grundelement angeordnet ist, d.h. in einem Abstand zu einem Rand, der kleiner ist als die Hälfte der Erstreckung des Grundelements quer zum Rand an dieser Stelle. Das randnahe Befestigungselement wirkt dabei einem Abheben des Kühlbehälters beispielsweise infolge Abbremsens des Kraftfahrzeugs besonders gut entgegen.

Sind mehrere Befestigungselemente quer zur Fahrtrichtung und/oder in Fahrtrichtung voneinander beabstandet, ergibt sich eine erhöhte Stabilität gegenüber in verschiedene Richtungen wirkenden Kipp- und/oder Drehmomenten.

Besonders vorteilhaft in Bezug auf die erzielbare Stabilität und einen geringen Materialeinsatz ist es, drei quer zur Fahrtrichtung zueinander versetzt angeordnete Befestigungselemente vorzusehen.

Dabei können kraftschlüssige und/oder formschlüssige Befestigungselemente verwendet werden.

Ein formschlüssiges Befestigungselement ermöglicht einen verhältnismäßig großflächigen Eingriff zwischen Kühlbehälter und Adapter, mit dem eine hohe Kraft in der Ebene des Adapters, d.h. parallel zum Grundelement oder zur Fahrtebene, übertragbar ist. Formschlüssig im Sinne der Erfindung ist ein Eingriff, bei dem eine Fläche des Grundelements an einer Fläche des Kühlbehälters derart zur Anlage kommt, dass eine Übertragung einer Kraft in der Adapterebene möglich ist. So ist das formschlüssige Befestigungselement beispielsweise eine Aussparung für einen sich aus dem Boden des Kühlbehälter heraus erstreckenden Fuß, oder umgekehrt ein Vorsprung für eine kühlbehälterbodenseitige Aussparung. Eine bodenseitige Anpassung des Kühlbehälters ist nicht erforderlich, da die Anpassung durch entsprechende Ausgestaltung des Grundelements des Adapters erfolgt. Somit ist nahezu jeder handelsübliche Kühlbehälter verwendbar, sofern mit dessen Boden oder Wänden eine formschlüssige Verbindung im Sinne der Erfindung herstellbar ist.

Ein kraftschlüssiges Befestigungselement, beispielsweise eine Verschraubung, sichert den Adapter zusätzlich gegen senkrecht zur Adapterebene wirkende Kräfte. Es wird vorzugsweise zusammen mit einem formschlüssigen Befestigungselement verwendet um sicherzustellen, dass das formschlüssige Befestigungselement sich nicht löst. Eine Schraube kann dabei einfach in den Kunststoffboden eines handelsüblichen Kühlbehälters eingedreht werden.

Besonders vorteilhaft ist die Verwendung sowohl eines kraft- als auch eines formschlüssigen Befestigungselements aus folgenden Erwägungen.

Ein kraftschlüssiges Befestigungselement ohne formschlüssiges Befestigungselement ist einer sehr starken Beanspruchung ausgesetzt, so dass es verhältnismäßig schnell ausleiern und ein Ablösen des Kühlbehälters vom Grundelement ermöglichen könnte. Um dies zu verhindern, wären mehrere kraftschlüssige Befestigungselement erforderlich. Die Befestigung am Kühlbehälter hat dann aber viele unansehnliche Löcher zur Folge.

Ebenso kann ein formschlüssiges Befestigungselement ohne kraftschlüssiges Befestigungselement den Kräften, die beim Betrieb des Kraftfahrzeugs über einen beladenen Kühlbehälter darauf wirken, auf Dauer und bei hoher Beladung des Kühlbehälters möglicherweise nicht ausreichend gut widerstehen, so dass sich der Formschluss lösen könnte.

Die Kombination aus wenigstens einem kraft- und wenigstens einem formschlüssigen Befestigungselement, wobei vorzugsweise wenigstens drei Befestigunselemente vorgesehen sind, führt in der Praxis zu einer langlebigen und hoch belastbaren Verbindung, bei der der Kühlbehälter nicht angepaßt werden muss und die zudem kostengünstig herstellbar ist.

Vorzugsweise sind zwei kraftschlüssige Befestigungselemente zwischen zwei formschlüssigen Befestigungselementen vorgesehen. Die äußere Anordnung der formschlüssigen Befestigungselemente kann höhere Drehkräfte in der Fahrtebene aufnehmen. Gleiches bewirkt auch die quer zur Fahrtrichtung versetzte doppelte Ausführung des kraftschlüssigen Befestigungselements. Der Abstand zwischen den kraftschlüssigen Befestigungselementen kann dabei größer sein als der Abstand zwischen jedem der kraftschlüssigen Elemente und dem jeweils benachbarten formschlüssigen Element. Hierdurch wird einer Kraft quer zur Fahrtebene, durch die der Formschluss gelöst werden könnte, benachbart zum Formschluss effektiv entgegengewirkt.

Das plattenförmige Grundelement kann einen sich in den Freiraum zwischen den Rastarmen erstreckenden Fortsatz aufweisen. Dieser Fortsatz vergrößert die Auflagefläche zwischen Kühlbehälter und Sitzfläche und kann gegebenenfalls zumindest teilweise in den Spalt zwischen Sitzfläche und Rückenlehne einschiebbar sein, um ein Anheben des Kühlbehälters noch besser zu unterdrücken.

Das plattenförmige Grundelement weist zweckmäßigerweise zwei abgewinkelte Seitenabschnitte zum U-förmigen Umgreifen des Kühlbehälters von unten auf. Die Seitenabschnitte sind durch einfaches Biegen herstellbar und können Kräfte quer zur Fahrtrichtung hervorragend aufnehmen.

Vorzugsweise liegt an den Seitenabschnitten jeweils einer der Rastarme an und wird dort jeweils von einem aus dem plattenförmigen Grundelement herausgebogenen Halteabschnitt zusammen mit dem Seitenabschnitt U-förmig umgriffen oder vollständig umschlossen. Diese Ausgestaltung ermöglicht eine einfache und kostengünstige Befestigung der Rastarme ohne zusätzliche Elemente.

### Figurenbeschreibung

Fig. 1 zeigt einen an einem Kühlbehälter befestigten Adapter in Draufsicht von unten.
Fig. 2 zeigt eine Seitenansicht auf den Adapter und den Kühlbehälter der Fig. 1 in an einem Sitz eines Kraftfahrzeugs montiertem Zustand.
Fig. 3 zeigt einen Schnitt entlang Linie A-A der Fig. 1.
Fig. 4 bis 7 illustrieren jeweils weitere Ausführungsformen eines beispielhaft fortsatzlosen Grundelements.
Fig. 8 und 9 illustrieren eine weitere Ausführungsform eines fortsatzlosen Grundelements in unmontiertem bzw. montiertem Zustand.

### Detaillierte Beschreibung einzelner Ausführungsformen

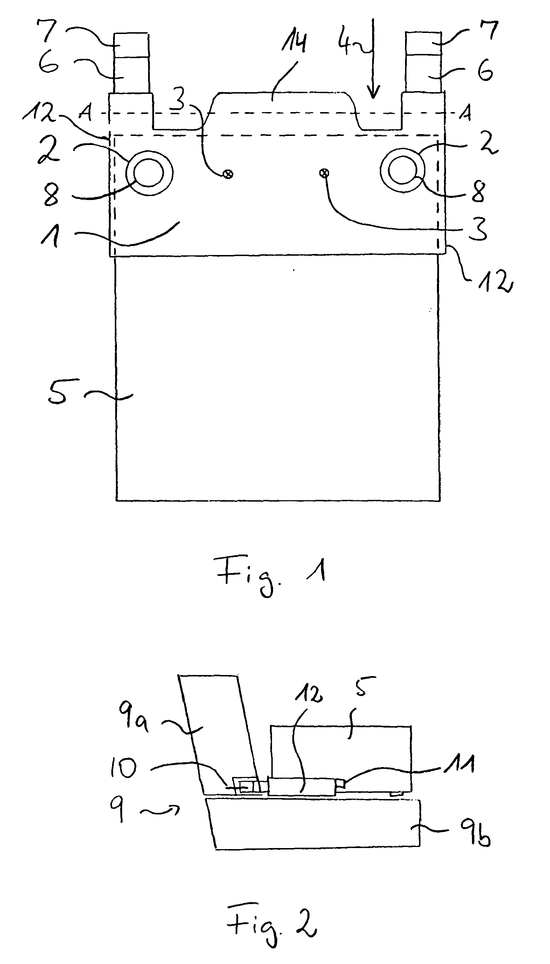

Der in Fig. 1 dargestellte Adapter umfasst ein plattenförmiges Grundelement 1, das hier über zwei formschlüssige Befestigungselemente 2 und zwei kraftschlüssige Befestigungselemente 3, die quer zur Fahrtrichtung 4 versetzt angeordnet sind, bodenseitig mit einem Kühlbehälter 5 verbunden ist. Ebenfalls quer zur Fahrtrichtung 4 versetzt erstrecken sich zwei Rastarme 6 aus dem Grundelement 1 heraus, die an ihren freien Enden jeweils ein Rastelement 7 aufweisen, das an Verankerungspunkten einer Verankerungsvorrichtung für Kindersitze in einem Kraftfahrzeug lösbar verankerbar ist.

Das dargestellte einstückige plattenförmige Grundelement 1 besteht hier aus einem zugeschnittenen und gebogenen Metallblech einer Dicke von z.B. etwa 1 mm bis 3 mm. Gegebenenfalls kann es aus mehreren Teilen zusammengesetzt und/oder ein Kunsstoffgußkörper sein. Das Grundelement 1 kann sich an die Kontur des Sitzes, auf dem es zur Auflage kommen soll, und/oder an die Kontur des Bodens des Kühlbehälters 5, mit dem es verbunden wird, anschmiegend geformt sein. Die Breite quer zur Fahrtrichtung 4 entspricht der Breite des Kühlbehälters 5 und bewegt sich zwischen 20 cm und 60 cm, vorzugsweise zwischen 30 cm und 40 cm. In Fahrtrichtung 4 erstreckt sich das plattenförmige Grundelement 1 zweckmäßigerweise über etwa ein Viertel bis ein Drittel seiner Breite, kann jedoch auch den gesamten Boden des Kühlbehälters 5 abdecken.

Die formschlüssigen Befestigungselemente 2 sind hier Bohrungen mit einem Durchmesser, der dem Durchmesser von Füßen 8 des Kühlbehälters derart entspricht, das ein formschlüssiger Eingriff zwischen Füßen 8 und Bohrungen möglich ist. Gegebenenfalls ist ein Spiel vorgesehen, z.B. ein umlaufender Spalt mit einer Breite von bis zu 1 mm, was im Sinne der Erfindung ebenfalls formschlüssig ist, solange der Adapter in Bezug auf den Kühlbehälter gegen eine Relativbewegung in der Ebene der Fig. 1 ausreichend gesichert ist.

Anstelle runder Bohrungen können die formschlüssigen Befestigungselemente 2 auch rechteckige oder anders geformte Aussparungen oder Erhabungen sein, die mit Erhabungen bzw. Aussparungen im Boden des Kühlbehälters 5 zur Anlage, d.h. in Formschluss bringbar sind, z.B. Stifte, Nasen, Haken, Rasthaken usw.

Die kraftschlüssigen Befestigungselemente 3 sind hier Schrauben, die von unten durch entsprechende Bohrungen im Grundelement 1 in den Boden des Kühlbehälters 5 eingedreht sind. Gegebenenfalls erstrecken sich die Schrauben bis in die Wärmeisolation hinein, enden jedoch vor Durchtritt in den Inneraum des Kühlbehälters 5.

Die in Fig. 1 dargestellte Einheit aus Adapter und Kühlbehälter 5 ist über die Rastarme 6 an einem Fahrzeugsitz 9 verankerbar, vgl. Fig. 2. Hierzu werden die Rastelemente 7 der Rastarme 6 mit Verankerungspunkten in Form von Bügeln 10 oder dergleichen im unteren, einer Sitzfläche 9b benachbarten Bereich einer Rückenlehne 9a des Fahrzeugsitzes 9 in Eingriff gebracht. Die Rastelemente 7 und die Bügel 10 können dabei entsprechend der Isofix-Norm ausgestaltet sein. Eine Entriegelungsvorrichtung 11, beispielsweise ein Zugseil, ist zum Lösen des Eingriffs vorgesehen.

Im verankerten Zustand liegen das Grundelement 1 sowie gegebenenfalls der nicht vom Grundelement 1 abgedeckte Rest des Bodens des Kühlbehälters 5 auf der Sitzfläche 9b auf. Das Grundelement 1 kann dabei den Kühlbehälter 5 mit zwei abgewinkelten Seitenabschnitten 12 U-förmig von unten umgreifen und diesen so zusätzlich gegen Kräfte quer zur Fahrtrichtung 4 sichern.

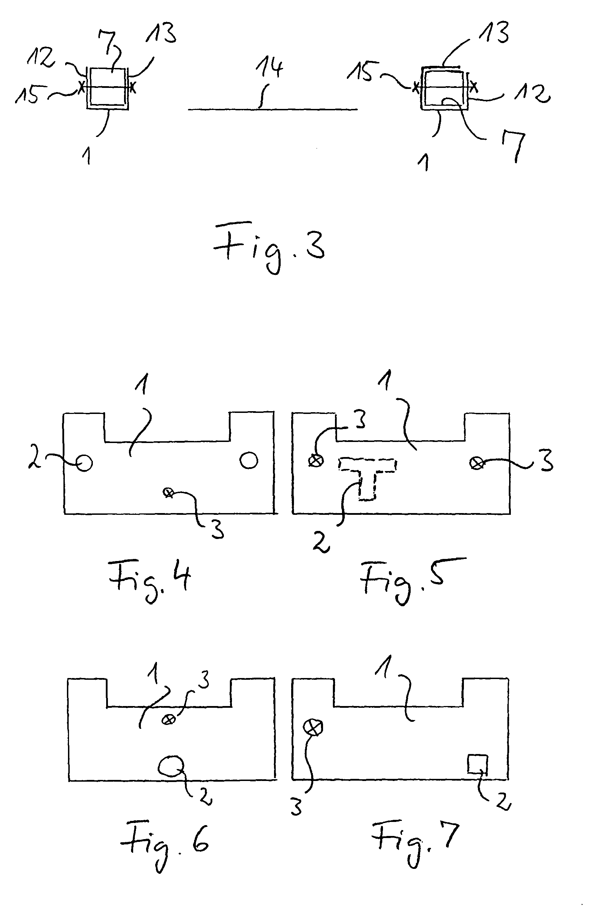

Die Rastarme 7 sind zweckmäßigerweise wie in Fig. 3 illustriert durch Herausbiegen von Halteabschnitten 13, ggf. unter Belassen eines Fortsatzes 14, aus dem Grundelement 1 geformt. Die Halteabschnitte 13 können die Rastarme 7 zusammen mit den Seitenabschnitten 12 wie rechts in der Fig. 3 illustriert vollständig oder wie links in der Fig. 3 illustriert U-förmig umgreifen. Befestigt sind die Rastarme 7 durch Verschraubungen 15 oder dergleichen.

Das in Fig. 4 illustrierte Grundelement 1 weist zwei außen angeordnete formschlüssige Befestigungselemente 2 und ein mittig dazwischen angeordnetes kraftschlüssiges Befestigungselement 3 auf.

Fig. 5 illustriert ein Grundelement 1, das zwei außen angeordnete kraftschlüssige Befestigungselemente 3 und ein außermittig dazwischen angeordnetes formschlüssiges Befestigungselement 2 aufweist, welches in eine Aussparung im Boden des Kühlbehälters 5 eingreift.

Fig. 6 illustriert ein Grundelement 1 mit zwei beispielhaft in aber nicht quer zur Fahrtrichtung versetzte Befestigungselemente 2, 3 vorgesehen sind. Eines der Befestigungselemente 3 ist dabei randnah angeordnet, d.h. in einem Abstand zum Rand, der kleiner ist als die Hälfte der Länge L quer zum Rand. Hierbei handelt es sich vorzugsweise um ein kraftschlüssiges Befestigungselement 3, da beispielsweise beim Abbremsen des Fahrzeugs eine (kleine) Kraftkomponente senkrecht zur Grundelementebene wirkt, die ein formschlüssiges Befestigungselement ausser Eingriff bringen könnte.

Fig. 7 illustriert ein Grundelement 1 mit einem kraftschlüssigen Befestigungselement 3, das sowohl in als auch quer zur Fahrtrichtung 4 gegenüber einem formschlüssigen Befestigungselement 2, hier beispielhaft ein sich vom Grundelement 1 in Richtung auf den Boden des Kühlbehälters 5 erstreckender Haken, beabstandet ist. Beide Befestigungselemente 2, 3 sind randnah angeordnet.

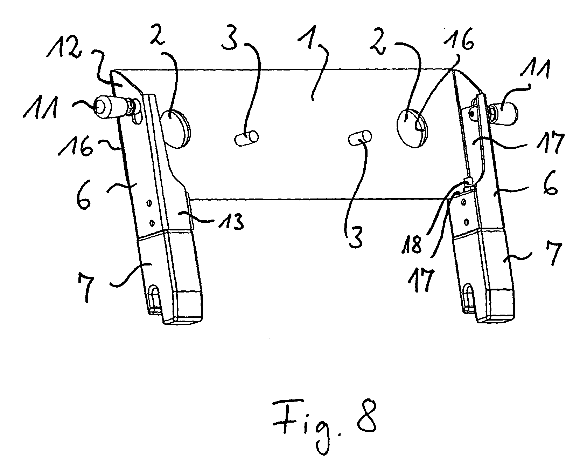

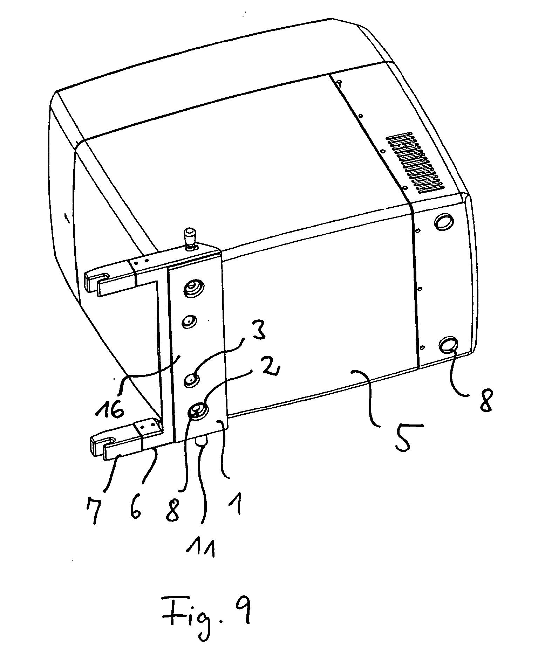

Bei der in Fig. 8 und 9 dargestellten Ausführungsform sind die kraftschlüssigen Elemente 3 als Schrauben ausgeführt, die bodenseitig in einen Kühlbehälter 5 eingeschraubt werden. Zwei von vier Füßen 8 des Kühlbehälters 5 greifen formschlüssig, insbesondere klemmend, in entsprechende formschlüssige Befestigungselemente 2 des Grundelements 1 ein. Eine optionale Aufdoppelung 16 aus Moosgummi, Kunststoff und/oder Stoff oder dergleichen schützt den Sitzbezug vor Beschädigung durch das Grundelement 1 und/oder das Grundelement 1 vor Beschädigung beim Abstellen auf einen harten Untergrund.

Die Entriegelungsvorrichtungen 11 sind hier jeweils in Form eines Hebels ausgeführt, der entlang der Längsachse des zugeordneten Rastarms 6 in einem Langloch verschiebbar ist. Am Hebel ist ein Schenkel eines starren L-förmigen Verbindungselements 17 befestigt, an dessen entgegengesetztem, zweckmäßigerweise abgewinkeltem Schenkel eine Stange oder ein Seil 18 befestigt ist, das mit der Rastmechanik im zugeordneten Rastelement 7 verbunden ist. Gegebenenfalls ist das Verbindungselement 17, das auch eine andere zweckmäßige, insbesondere gerade Form aufweisen kann, direkt mit der Rastmechanik verbunden. Beim Verschieben des Hebels im Langloch wird über das Verbindungselement 17 und gegebenenfalls das Seil 18 die Rastmechanik gelöst, so dass das Grundelement 1 mit befestigtem Kühlbehälter 5 aus der Isofix-Halterung entfernt werden kann.

### Bezugszeichenliste

- 1: Grundelement
- 2: formschlüssiges Befestigungselement
- 3: kraftschlüssiges Befestigungselement
- 4: Fahrtrichtung
- 5: Kühlbehälter
- 6: Rastarm
- 7: Rastelement
- 8: Fuß
- 9: Fahrzeugsitz
- 10: Bügel
- 11: Entriegelungsvorrichtung
- 12: Seitenabschnitt
- 13: Halteabschnitt
- 14: Fortsatz
- 15: Verschraubung
- 16: Aufdoppelung
- 17: Verbindungselement
- 18: Seil

## Patentansprüche

1. Adapter zum Befestigen eines tragbaren Kühlbehälters (5) an einer Verankerungsvorrichtung an einem Sitz in einem Kraftfahrzeug, wobei die Verankerungsvorrichtung zwei quer zur Fahrtrichtung (4) beabstandete kraftfahrzeugfeste Verankerungspunkte aufweist, **dadurch gekennzeichnet, dass** ein plattenförmiges Grundelement (1) des Adapters mittels eines Befestigungselements (2, 3) bodenseitig mit dem Kühlbehälter (5) verbindbar und mittels zweier quer zur Fahrtrichtung (4) voneinander beabstandeter Rastarme (6), die in der Ebene des Grundelements (1) angeordnet sind und an ihren freien Enden jeweils ein Rastelement (7) aufweisen, an Kindersitz-Verankerungspunkten verankerbar ist, und die Verankerung durch werkzeugloses Betätigen einer Entriegelungsvorrichtung (11) des Adapters lösbar ist.

2. Adapter nach Anspruch 1, **dadurch gekennzeichnet, dass** wenigstens zwei Befestigungselemente (2, 3) vorgesehen sind, von denen wenigstens eines randnah am plattenförmigen Grundelement angeordnet ist.

3. Adapter nach Anspruch 1 oder 2, **dadurch gekennzeichnet, dass** die Befestigungselemente (2, 3) quer zur Fahrtrichtung und/oder in Fahrtrichtung voneinander beabstandet sind.

4. Adapter nach einem der Ansprüche 1 bis 3, **dadurch gekennzeichnet, dass** wenigstens drei quer zur Fahrtrichtung (4) zueinander versetzt angeordnete Befestigungselemente (2, 3) vorgesehen sind.

5. Adapter nach einem der Ansprüche 1 bis 4, **dadurch gekennzeichnet, dass** kraftschlüssige und/oder formschlüssige Befestigungselemente (3, 2) vorgesehen sind.

6. Adapter nach Anspruch 5, **dadurch gekennzeichnet, dass** das kraftschlüssige Befestigungselement (3) eine in den Boden des Kühlbehälters (5) eindrehbare Schraube ist.

7. Adapter nach Anspruch 5 oder 6, **dadurch gekennzeichnet, dass** das formschlüssige Befestigungselement (2) eine Aussparung ist, in die ein bodenseitiger Vorsprung des Kühlbehälters (5) eingreift.

8. Adapter nach einem der Ansprüche 5 bis 7, **dadurch gekennzeichnet, dass** zwischen zwei formschlüssigen Befestigungselementen (2) zwei kraftschlüssige Befestigungselemente (3) vorgesehen sind.

9. Adapter nach Anspruch 8, **dadurch gekennzeichnet, dass** der Abstand zwischen den kraftschlüssigen Befestigungselementen (3) größer ist als der Abstand zwischen jedem der kraftschlüssigen Elemente (3) und dem jeweils benachbarten formschlüssigen Element (2).

10. Adapter nach einem der Ansprüche 1 bis 9, **dadurch gekennzeichnet, dass** das plattenförmige Grundelement (1) einen sich in den Freiraum zwischen den Rastarmen (6) erstreckenden Fortsatz (14) aufweist.

11. Adapter nach einem der Ansprüche 1 bis 10, **dadurch gekennzeichnet, dass** das plattenförmige Grundelement (1) zwei abgewinkelte Seitenabschnitte (12) zum U-förmigen Umgreifen des Kühlbehälters (5) von unten aufweist.

12. Adapter nach Anspruch 11, **dadurch gekennzeichnet, dass** an den Seitenabschnitten (12) jeweils einer der Rastarme (6) anliegt und dort jeweils von einem aus dem plattenförmigen Grundelement (1) herausgebogenen Halteabschnitt (13) zusammen mit dem Seitenabschnitt (12) U-förmig umgriffen oder vollständig umschlossen ist.

13. Kühlbehälter mit einem Adapter nach einem der Ansprüche 1 bis 12.

## Claims

1. Adapter for fastening a portable coolbox (5) to an anchoring arrangement on a seat in a motor vehicle, the anchoring arrangement having two anchoring points fixed to the vehicle which are spaced apart transversely to the direction of travel (4), **characterised in that** a base member (1), in plate form, of the adapter can be connected to the bottom of the coolbox (5) by means of a fastening member (2, 3) and can be anchored to anchoring points for a child's seat by means of two latching arms (6) which are spaced apart from one another transversely to the direction of travel (4), which are arranged in the plane of the base member (1), and which have respective latching members (7) at their free ends, and the anchoring can be released by actuating, without the use of tools, a device (11) for unlocking the adapter.

2. Adapter according to claim 1, **characterised in that** at least two fastening members (2, 3) are provided, at least one of which is arranged close to the edge of the base member in plate form.

3. Adapter according to claim 1 or 2, **characterised in that** the fastening members (2, 3) are spaced apart from one another transversely to the direction of travel and/or in the direction of travel.

4. Adapter according to one of claims 1 to 3, **characterised in that** at least three fastening members (2, 3) are provided which are offset from one another transversely to the direction of travel (4).

5. Adapter according to one of claims 1 to 4, **characterised in that** fastening members (3, 2) which are held by friction and/or engage by positive interengagement are provided.

6. Adapter according to claim 5, **characterised in that** the fastening member (3) which is held by friction is a screw which can be screwed into the bottom of the coolbox (5).

7. Adapter according to claim 5 or 6, **characterised in that** the fastening member (2) which engages by positive interengagement is an opening in which a projection at the bottom of the coolbox (5) engages.

8. Adapter according to one of claims 5 to 7, **characterised in that** two fastening members (2) which are held by friction are provided between two fastening members (3) which engage by positive interengagement.

9. Adapter according to claim 8, **characterised in that** the spacing between the fastening members (3) which are held by friction is greater than the spacing between either one of the members (3) which are held by friction and that member (2) which engages by positive interengagement which is adjacent to it.

10. Adapter according to one of claims 1 to 9, **characterised in that** the base member (1) in plate form has an extension (14) which extends into the open space between the latching arms (6).

11. Adapter according to one of claims 1 to 10, **characterised in that** the base member (1) in plate form has two side portions (12) bent at an angle to fit round the coolbox (5) from below in a U-shape.

12. Adapter according to claim 11, **characterised in that** respective ones of the latching arms (6) bear against the side portions (12) and, at this point, respective retaining portions (13) which are folded from the base member (1) in plate form, together with the side portions (12), fit round the latching arms (6) in a U-shape or completely enclose them.

13. Coolbox having an adapter according to one of claims 1 to 12.

## Revendications

1. Adaptateur pour fixer un conteneur réfrigéré (5) portatif sur un dispositif d'ancrage d'un siège de véhicule automobile,
le dispositif d'ancrage comportant deux points d'ancrage solidaires du véhicule, écartés transversalement dans la direction de circulation (4),
**caractérisé par**
un élément de base en forme de plaque (1) qui sert d'adaptateur et qui est relié par un élément de fixation (2, 3) du côté du fond, au conteneur réfrigéré (5), avec l'aide de deux bras d'enclipsage (6) écartés transversalement dans la direction de circulation (4), et installés dans le plan de l'élément de base (1) et dont les extrémités libres comportent chacune un élément d'enclipsage (7), il peut être verrouillé aux points d'ancrage d'un siège d'enfant, et
le verrouillage peut être libéré sans nécessiter d'outil par l'actionnement d'un dispositif de déverrouillage (11) de l'adaptateur.

2. Adaptateur selon la revendication 1,
**caractérisé par**
au moins deux éléments de fixation (2, 3) parmi lesquels au moins un élément est proche du bord de l'élément de base en forme de plaque.

3. Adaptateur selon la revendication 1 ou 2,
**caractérisé en ce que**
les éléments de fixation (2, 3) sont écartés transversalement à la direction de déplacement et/ou dans la direction de déplacement.

4. Adaptateur selon les revendications 1 à 3,
**caractérisé par**
au moins trois éléments de fixation (2, 3) décalés l'un par rapport à l'autre dans la direction de circulation (4).

5. Adaptateur selon les revendications 1 à 4,
**caractérisé par**
des éléments de fixation (3, 2) réalisant une liaison par la force et/ou par la forme.

6. Adaptateur selon la revendication 5,
**caractérisé en ce que**
l'élément de fixation (3) réalisant une liaison par la force est une vis qui se loge dans le fond du conteneur réfrigéré (5).

7. Adaptateur selon la revendication 5 ou 6,
**caractérisé en ce que**
l'élément de fixation (2) réalisant une liaison par la forme est une cavité dans laquelle pénètre une partie en saillie du côté du fond du conteneur réfrigéré (5).

8. Adaptateur selon les revendications 5 à 7,
**caractérisé par**
deux éléments de fixation (3) par une liaison par la force entre deux éléments de fixation (2) par une liaison par la forme.

9. Adaptateur selon la revendication 8,
**caractérisé en ce que**
la distance entre les éléments de fixation (3) pour la liaison par la force est supérieure à la distance entre chacun des éléments de liaison par la force (3) et l'élément de liaison par la forme (2) respectivement voisin.

10. Adaptateur selon les revendications 1 à 9,
**caractérisé en ce que**
l'élément de base (1) en forme de plaque comporte un prolongement (14) s'étendant dans l'espace libre entre les bras d'enclipsage (6).

11. Adaptateur selon les revendications 1 à 10,
**caractérisé en ce que**
l'élément de base (1) en forme de plaque comporte deux segments latéraux (12), repliés, pour entourer le bas du conteneur réfrigéré (5) suivant une forme en U.

12. Adaptateur selon la revendication 11,
**caractérisé en ce que**
chacun des bras d'enclipsage (6) est appliqué contre un segment latéral (12), pour être entouré suivant une forme de U ou être entouré complètement chaque fois par un segment de fixation (13) recourbé à partir de l'élément de base en forme de plaque (1) avec le segment latéral (12).

13. Conteneur réfrigéré comportant un adaptateur selon les revendications 1 à 12.
